# EUROPEAN PATENT SPECIFICATION

(11) **EP 0 565 222 B1**
(45) Date of publication and mention of the grant of the patent: **24.04.1996**
(21) Application number: 93300656.1
(22) Date of filing: 29.01.1993
(51) Int. Cl.: A23L 1/325, A23B 4/06

(54) **Fish-based frozen food product**
Gefrorene Nahrungsprodukt auf Basis von Fisch
Produit alimentaire congelé à base de poisson

(30) Priority: 31.01.1992 EP 92200274
(43) Date of publication of application: 13.10.1993
(73) Proprietor: UNILEVER PLC, London EC4P 4BQ (GB); UNILEVER N.V., NL-3013 AL Rotterdam (NL)
(72) Inventor: Henning, Wilfried, D - 2800 Bremen 1 (DE); Douglas-Schwarz, Melinda, New York 14456 (US); Schmiedel, Manfred, D - 2858 Schifford-Spaden (DE)
(74) Representative: Kirsch, Susan Edith

(56) References cited:
- EP-A- 0 327 857
- BE-A- 682 529
- FR-A- 2 601 562
- GB-A- 1 185 866
- GB-A- 1 339 241
- US-A- 3 718 481
- US-A- 4 781 929

## Description

The present invention relates to a frozen, pre-fried, coated, fish-based product and to a method of producing such products.

It is known from Japanese Patent Application JP-A 60-168,353 (Nichiro Gyogyo KK) how to produce frozen pieces of fish meat of constant shape and weight, which on top are subsequently partly provided with a semi-fluid material such as a sauce. The resulting product is then sterilized and pre-cooked by heating, e.g. with steam. The cooked product is then provided with an outer edible coating, put into a tray and quickly frozen.

The disadvantage of this method is that first the portions of the fish meat are brought into their final shape and that subsequently the sauce needs to be dosed very accurately on these relatively small portions at relatively high speeds in order to arrive at economically acceptable production speeds.

Moreover, it cannot be seen from the outside that the product consists of a fish base provided with a sauce. In other words, the consumer cannot perceive the difference with a normal fishburger and cannot see the total contents of the product.

It is an object of the present invention to avoid the disadvantages of this prior art method and also to provide a product of which the consumer can see the total contents. To this purpose, a product is provided having a plurality of alternating layers based on fish material and edible material, and which has at least one non-coated side, so that the interior of the product is clearly visible for the consumer.

Therefore, the present invention relates to a frozen, pre-fried, coated, fish-based product, which is characterized in that it comprises a plurality of alternating layers of fish material and layers of edible material and is provided with at least one non-coated side, showing the interior layered structure of the product.

The layer of fish material is preferably obtained by freezing fish pieces or fish fillet in the form of preferably rectangular slabs or blocks, which are subsequently reduced to the required size, as will be described in connection with the process according to the present invention for the manufacture of the fish products.

The type of fish to be used is dependent upon the final product characteristics required and in general only one type of fish is used, but also mixtures of different types of fish may be used in each layer of fish material, which may have a different nature. Furthermore, the layers of fish material may have different compositions and may also comprise another edible material selected from the group consisting of meat from poultry or mammals, vegetable proteins, fungal proteins, caseinate, vegetables, dairy products, bakery products, egg material, fruit, herbs, spices, flavouring agents, colouring agents, antioxidants, vitamins, minerals, fats, and mixtures thereof.

The frozen rectangular blocks are divided into planks of the required size and shape, for example by sawing. The "saw dust" of fish material obtained can be used in the preparation of the layer of other edible material.

The layer of other edible material which is deposited on the plank of frozen fish material is preferably in a fluid or semi-fluid form so as to enable easy deposition on the planks of frozen fish material. Preferably, the other edible material contrasts with the layer of fish material in colour and/or flavour and taste. The other edible material may comprise meat from fish, poultry or mammals, such as chicken, turkey, beef, pork, lamb meat, and mixtures thereof; vegetable proteins, such as soybean protein; fungal proteins, such as mycoprotein; caseinate; vegetables, such as red peppers, onion or cabbage; dairy products, such as cheese, yoghurt; bakery products, such as crumbs; egg material; fruit; herbs, spices and flavouring agents; colouring agents; curing agents; vitamins; antioxidants; minerals; fats, which may also be fat fractions, or fat substitutes, and mixtures of these edible materials.

The frozen, coated, pre-fried, fish-based products have at least one non-coated side, so that the layered structure of the alternating different layers is clearly visible. The outside coating of the product preferably consists of battering and breading, but also other coatings, such as a batter with small pieces of vegetables, and a coating of vegetables and/or potato material may be used. Coloured, starch-based material particles may also be present.

This coating itself may also comprise particles of different size and colour so as to obtain certain optical and colour effects. The coating may also be applied in the form of discrete adjacent regions of different colour and/or flavour and taste, such as, for example, striping or chequered.

Preferably, the fish-based product is rectangular in shape, but also other forms may be used, like a circular, ellipsoid, and the like form. The product may also be in the form of an animal, like a fish, or in the form of a letter, a tree, and the like phantasy forms.

A preferred process of preparing the frozen, pre-fried, coated, fish-based products according to the present invention comprises the steps of :
(a) forming fish material into a slab or block;
(b) dividing the slab or block parallel to the largest outer plane into planks;
(c) applying to the largest outer plane of said planks an edible material, such that at least part of the largest outer plane of the plank is covered with said edible material;
(d) reassembling said planks into said slab or block again, such that a laminate is formed in which each two successive planks are separated by a layer of said edible material;
(e) dividing said laminate slab or block into portions having the size and shape of twice the thickness of the required final portion size;
(f) providing said portions with a coating, pre-frying and freezing the coated portions;
(g) dividing each of the frozen, pre-fried, coated portions into two portions of the required final product size; and
(h) packaging the frozen, pre-fried, coated, fish-based product.

Preferably, the slab or block formed in step (a) is a rectangular slab or block.

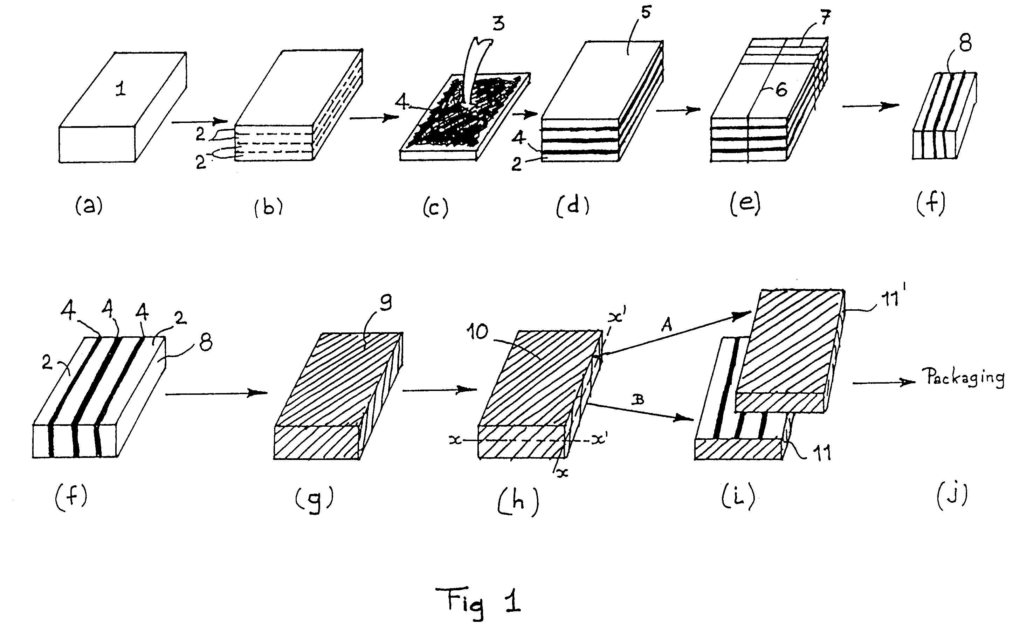

The preferred process of preparing the frozen, pre-fried, coated fish-based products according to the present invention will now be further described in Fig. 1.

In Fig. 1, the various steps of the process according to the present invention for preparing products according to the present invention have been depicted.

In Fig. 1(a), the fish material is frozen into a rectangular slab or block 1. To this purpose, fish fillet or pieces may be shaped into a rectangular slab or block, for example by extrusion, which is then solidified, preferably by freezing. The fish material may also be mixed with vegetables, spices and the like materials, and different types of fish material may be used in the slabs or blocks. Saw dust of fish material obtained by dividing the frozen blocks may also be admixed.

Fig. 1(b) shows the next step of the process in which said slabs or blocks 1 are divided into planks 2, which is preferably done by sawing, laser-cutting, ultrasonic cutting or high-pressure water jet cutting, parallel to the largest outer plane of the slab or the block. Usually, this is the plane upon which the slab or block normally rests.

In the next step, depicted in Fig. 1(c), an edible material 3 is applied on to the largest outer plane of the planks 2, such that at least part of this largest plane of the plank 2 is covered with a layer 4 of edible material 3. The thickness of this layer 4 of edible material 3 may vary according to the desired organoleptic properties of the final product, but is, in general, at least 0.5 mm thick.

Fig. 1(d) depicts the reassembling of the planks 2 into a laminate 5, in which each two successive planks 2 are separated by a layer 4 of the edible material 3. The number of planks 2 and layers of edible material 4 may vary, but at least one layer 4 of edible material 3 is present in the laminate. Layers 4 of different edible material 3 may also be present in the laminate 5, and these layers may also have different thicknesses. Thus, the layers 4 may have different colour and/or taste.

In Fig. 1(e), the laminate 5 is divided into portions having the size and shape of twice the required final portion size (so-called double portions) by cutting the laminate 5 along a long axis 6 and along a number of short axes 7 perpendicular to long axis 6, as indicated. The double portions 8 obtained have been depicted in Fig. 1(f). This double portion 8 is provided with a coating 9, pre-fried and frozen, which steps have been summarized in Fig. 1(g). The frozen, pre-fried, coated double portion 10 is then divided (A,B) along indicated plane (X,X) into two portions of the required final portion size 11,11', as has been depicted in Figs. 1(h) and 1(i).

From Fig. 1(i) it is clear that in this way a frozen, pre-fried, coated, fish-based product according to the present invention is obtained, in which one side of the product is non-coated, thus clearly showing the layered or laminate structure of the final product.

Finally, in Fig. 1(j), the final product has schematically been shown to be packaged. This packaging can be effected in a manner known **per se**, for example, using so-called flow-wrap techniques and inert gas flushing techniques (controlled atmosphere packaging).

In another embodiment of the process according to the present invention the double portions 8 are prepared by co-extruding the fish material and the edible material 6 and the co-extruded double portions 8 are subsequently coated, prefried and frozen and further treated, as depicted in Fig. 1(h, i, j).

If the frozen, pre-fried, coated, fish-based product according to the present invention has a round form, an ellipsoid form, or an animal or letter, or other phantasy shape, first the laminate 5 is formed and then the required final shape may be punched or cut from this laminate.

The invention will now be illustrated by the following Example.

### EXAMPLE

Pieces of Alaska pollack were shaped into a rectangular frozen slab or block of 482 mm x 254 mm x 62.7 mm. This block or slab was divided into six planks by sawing, having a dimension of 482 mm x 254 mm x 20 mm. On to the largest outer plane of said planks a layer of mm of 84 mm of a Cheddar cheese-based sauce with pieces of broccoli was deposited at 10°C.

The six planks were subsequently reassembled into a laminate block and frozen to a temperature of -18°C and subsequently divided into portions of 62 mm x 62.7 mm x 30 mm (so-called double portions) by sawing. The double portions were then coated by battering and breading in a manner known **per se**.

Then the coated portions were pre-fried by deep-fat frying, using a vegetable frying oil at a temperature of 195°C for 30 seconds.

The pre-fried, coated, double portions were then frozen and divided by sawing into the final, required portions of 62 mm x 62.7 mm x 15 mm and packaged as four portions of 75 grams each in a cardboard box.

## Claims

1. A frozen, pre-fried, coated, fish-based product, comprising a plurality of alternating layers of fish material, and layers of edible material, wherein the product is provided with at least one non-coated side showing the interior layered structure of the product.

2. A product according to Claim 1, wherein the layer of fish material also comprises another edible material selected from meat from poultry or mammals, vegetable proteins, fungal proteins, caseinate, vegetables, dairy products, bakery products, egg material, fruit, herbs, spices, flavouring agents, colouring agents, antioxidants, vitamins, minerals, fats, and mixtures thereof.

3. A product according to Claim 1 or Claim 2, wherein the fish material has been subjected to a pre-treatment selected from marinading and smoking.

4. A product according to any preceding Claim wherein the layer of edible material comprises a material selected from meat from fish, poultry or mammals, vegetable proteins, fungal proteins, caseinate, vegetables, bakery products, dairy products, egg material, fruit, herbs, spices, flavouring agents, colouring agents, curing agents, vitamins, minerals, antioxidants, fats, and mixtures thereof.

5. A product according to any preceding Claim, wherein the layers of fish material and the layers of edible material have a different colour and/or flavour.

6. A product according to any preceding Claim wherein the coating material comprises pieces of material selected from meat from fish, poultry or mammals, vegetables, and mixtures thereof.

7. A product according to any preceding Claim wherein the coating material is applied in the form of discrete adjacent regions of different colours and/or flavours.

8. A product according to any preceding Claim wherein it has a shape selected from rectangular, circular, ellipsoid, animal, tree, letter and fantasy forms.

9. A process of preparing the frozen, pre-fried, coated, fish-based products according to any one of Claims 1-8, comprising the steps of
(a) forming fish material into a slab or block;
(b) dividing the slab or block parallel to the largest outer plane into planks;
(c) applying to the largest outer plane of said planks an edible material, such that at least part of the largest outer plane of the plank is covered with said edible material;
(d) reassembling said planks into said slab or block again, such that a laminate is formed in which each two successive planks are separated by a layer of said edible material;
(e) dividing said laminate slab or block into portions having the size and shape of twice the thickness of the required final portion size;
(f) providing said portions with a coating, pre-frying and freezing the coated portions;
(g) dividing each of the frozen, pre-fried, coated portions into two portions of the required final product size; and
(h) packaging the frozen, pre-fried, coated, fish-based product.

10. A process according to Claim 9, in which in steps (b), (e) and (g) the division is effected by sawing, laser-cutting, ultrasonic cutting or high-pressure water jet cutting.

11. A process according to Claim 9, in which in step (c) the edible material is applied on to the plank in a thickness of at least 0.5 mm.

12. A process according to Claim 9, in which in step (d) at least one layer of edible material is present in the laminate.

13. A process according to Claim 9, in which the product of step (e) is prepared by co-extrusion of layers of fish material and edible material.

14. A process according to Claim 9, in which the slab or block of step (a) is rectangular.

15. A process according to Claim 9, in which a non-rectangular product is prepared by punching or butting from the laminate obtained in step (d) or according to Claim 13.

## Patentansprüche

1. Gefrorenes, vorgebratenes, überzogenes Produkt auf Fisch-Basis, welches eine Vielzahl abwechselnder Schichten aus Fischmaterial und Schichten aus eßbarem Material umfaßt, wobei das Produkt mit zumindest einer nicht-überzogenen Seite versehen ist, die die innere Schichtstruktur des Produkts zeigt.

2. Produkt nach Anspruch 1, bei welchem die Schicht aus Fischmaterial auch ein weiteres eßbares Material, ausgewählt aus Fleisch von Geflügel oder Säugetieren, Pflanzenproteinen, Pilzproteinen, Caseinat, Gemüse, Milchprodukten, Backprodukten, Eimaterial, Früchten, Kräutern, Gewürzen, Geschmacksstoffen, Färbemitteln, Antioxidantien, Vitaminen, Mineralien, Fetten und Mischungen hievon, umfaßt.

3. Produkt nach Anspruch 1 oder 2, bei welchem das Fischmaterial einer Vorbehandlung, ausgewählt aus Marinieren und Räuchern, unterworfen wurde.

4. Produkt nach einem der vorhergehenden Ansprüche, bei welchem die Schicht aus eßbarem Material ein Material, ausgewählt aus Fleisch von Fischen, Geflügel oder Säugetieren, Pflanzenproteinen, Pilzproteinen, Caseinat, Gemüse, Backprodukten, Milchprodukten, Eimaterial, Früchten, Kräutern, Gewürzen, Geschmacksstoffen, Färbemitteln, Härtungsmitteln, Vitaminen, Mineralien, Antioxidantien, Fetten und Mischungen hievon, umfaßt.

5. Produkt nach einem der vorhergehenden Ansprüche, bei welchem die Schichten aus Fischmaterial und die Schichten aus eßbarem Material eine unterschiedliche Farbe und/oder einen unterschiedlichen Geschmack aufweisen.

6. Produkt nach einem der vorhergehenden Ansprüche, bei welchem das Überzugsmaterial Materialstücke, ausgewählt aus Fleisch von Fischen, Geflügel oder Säugetieren, Gemüse und Mischungen hievon, umfaßt.

7. Produkt nach einem der vorhergehenden Ansprüche, bei welchem das Überzugsmaterial in Form einzelner benachbarter Bereiche mit unterschiedlichen Farben und/oder unterschiedlichem Geschmack aufgebracht wird.

8. Produkt nach einem der vorhergehenden Ansprüche, wobei es eine Form, ausgewählt aus Rechtecken, Kreisen, Ellipsen, Tieren, Bäumen, Buchstaben und Fantasieformen, aufweist.

9. Verfahren zur Herstellung der gefrorenen, vorgebratenen, überzogenen Produkte auf Fisch-Basis nach einem der Ansprüche 1 bis 8, welches die Schritte umfaßt:
(a) Formen von Fischmaterial zu einer Platte oder einem Block;
(b) Teilen der Platte oder des Blocks parallel zur größten äußeren Ebene in Planken;
(c) Aufbringen eines eßbaren Materials auf die größte äußere Ebene der Planken, so daß zumindest ein Teil der größten äußeren Ebene der Planke mit dem eßbaren Material bedeckt ist;
(d) erneutes Zusammensetzen der Planken zu der Platte oder zu dem Block, so daß ein Laminat gebildet wird, in dem jeweils zwei aufeinanderfolgende Planken durch eine Schicht aus dem eßbaren Material getrennt sind;
(e) Teilen der Laminatplatte oder des Laminatblocks in Portionen mit einer Größe und Form, die das Doppelte der Dicke der erforderlichen End-Portionsgröße beträgt;
(f) Versehen der Portionen mit einem Überzug, Vorbraten und Einfrieren der überzogenen Portionen;
(g) Teilen jeder gefrorenen, vorgebratenen, überzogenen Portion in zwei Portionen mit der erforderlichen End-Produktgröße; und
(h) Verpacken des gefrorenen, vorgebratenen, überzogenen Produkts auf Fisch-Basis.

10. Verfahren nach Anspruch 9, bei welchem in den Schritten (b), (e) und (g) das Teilen durch Sägen, Laserschneiden, Ultraschallschneiden oder Hochdruck-Wasserstrahlschneiden bewirkt wird.

11. Verfahren nach Anspruch 9, bei welchem in Schritt (c) das eßbare Material auf die Planke mit einer Dicke von zumindest 0,5 mm aufgebracht wird.

12. Verfahren nach Anspruch 9, bei welchem in Schritt (d) zumindest eine Schicht aus eßbarem Material im Laminat vorliegt.

13. Verfahren nach Anspruch 9, bei welchem das Produkt von Schritt (e) durch Co-Extrusion von Schichten aus Fischmaterial und eßbarem Material hergestellt wird.

14. Verfahren nach Anspruch 9, bei welchem die Platte oder der Block von Schritt (a) rechteckig ist.

15. Verfahren nach Anspruch 9, bei welchem ein nicht-rechteckiges Produkt durch Ausstanzen oder Ausstechen aus dem Laminat, das in Schritt (d) oder nach Anspruch 13 erhalten wird, hergestellt wird.

## Revendications

1. Un produit alimentaire à base de poisson, enrobé, précuit et congelé, comprenant plusieurs couches disposées en alternance et composées de matière de poisson et d'autres couches composées de matière comestible, le produit alimentaire présentant au moins un côté non enrobé, permettant de mettre en évidence la structure intérieure en couche du produit.

2. Un produit alimentaire selon la Revendication 1, dans lequel la couche composée de matière de poisson comprend en outre une autre matière comestible sélectionnée parmi le groupe composé de viandes de volaille ou de mammifère, de protéines végétales, de protéines fongiques, de caséinate, de légumes, de produits laitiers, de produits boulangers, de matières d'oeuf de fruits, d'herbes et d'épices d'agents de saveur, d'agents colorants, d'antioxydants, de vitamines, de minéraux, de graisses, et de mélanges de ceux-ci.

3. Un produit alimentaire selon la Revendication 1 ou la Revendication 2, dans lequel la matière de poisson a été soumise à un prétraitement sélectionné parmi les méthodes de marinade et de fumage.

4. Un produit alimentaire selon l'une quelconque des Revendications précédentes, dans lequel la couche composée de matière comestible comprend une matière sélectionnée parmi le groupe composé de chair de poisson, de viande de volaille ou de mammifère, de protéines végétales, de protéines fongiques, de caséinate, de légumes, de produits laitiers, de produits boulangers, de matières d'oeuf, de fruits, d'herbes et d'épices, d'agents de saveur, d'agents colorants, d'agents de cuisson, de vitamines, de minéraux, d'antioxydants, de graisses, et de mélanges de ceux-ci.

5. Un produit alimentaire selon l'une quelconque des Revendications précédentes, dans lequel les couches composées de matière de poisson et les couches composées de matière comestible présentent des couleurs et/ou des saveurs différentes.

6. Un produit alimentaire selon l'une quelconque des Revendications précédentes, dans lequel la matière d'enrobage comprend des morceaux de matière sélectionnée parmi de la chair de poisson, de la viande de volaille ou de mammifère, des légumes et des mélanges de ceux-ci.

7. Un produit alimentaire selon l'une quelconque des Revendications précédentes, dans lequel la matière d'enrobage est appliquée sous forme de régions adjacentes discrètes de couleurs et/ou de saveurs différentes.

8. Un produit alimentaire selon l'une quelconque des Revendications précédentes, dans lequel il présente une forme sélectionnée parmi les formes d'un rectangle, d'un cercle, d'un ellipsoïde, d'un animal, d'un arbre, d'une lettre alphabétique ou autres formes fantaisistes.

9. Un procédé de préparation des produits alimentaires à base de poisson, enrobés, précuits et congelés en accord avec l'une quelconque des Revendications 1 à 8, et qui comprend les étapes consistant à :
(a) donner à la matière de poisson la forme d'une brique ou d'un bloc ;
(b) diviser la brique ou le bloc en tranches selon un plan parallèle à la surface extérieure plus large ;
(c) appliquer sur ladite surface extérieure plus large desdites tranches une matière comestible, de façon à ce qu'au moins une partie de la surface extérieure plus large de la tranche soit recouverte avec ladite matière comestible ;
(d) réunir lesdites tranches pour reformer ladite brique ou ledit bloc, de façon à ce qu'une structure multicouche soit formée, selon laquelle deux tranches successives sont séparées par une couche composée de ladite matière comestible ;
(e) diviser ladite brique ou ledit bloc de structure multicouche en portions présentant des dimensions et une forme équivalent à deux fois l'épaisseur de la taille de la portion finale requise ;
(f) enduire lesdites portions d'un enrobage ; précuire et congeler les portions enrobées ;
(g) diviser chacune des portions enrobées, précuites et congelées en deux portions présentant la taille requise du produit final attendu ; et
(h) emballer le produit alimentaire à base de poisson enrobé, précuit et congelé.

10. Un procédé selon la Revendication 9, selon lequel la découpe intervenant aux étapes (b), (e) et (g) est réalisée par sciage, découpe au laser, découpe ultrasonique ou découpe par jet d'eau haute pression.

11. Un procédé selon la Revendication 9, dans lequel la matière comestible de l'étape (c) est appliquée sur la tranche selon une épaisseur au moins égale à 0,5 mm.

12. Un procédé selon la Revendication 9, dans lequel au moins une couche composée de matière comestible est présente dans la structure multicouche au cours de l'étape (d).

13. Un procédé selon la Revendication 9, dans lequel le produit alimentaire de l'étape (e) est préparé par co-extrusion de couches composées de matière de poisson et de matière comestible.

14. Un procédé selon la Revendication 9, dans lequel la brique ou le bloc de l'étape (a) est rectangulaire.

15. Un procédé selon la Revendication 9, dans lequel on prépare un produit alimentaire non rectangulaire en perforant ou en découpant la structure multicouche obtenue au cours de l'étape (d) ou selon la Revendication 13.
